# EUROPEAN PATENT SPECIFICATION

(11) **EP 4 056 906 B1**
(45) Date of publication and mention of the grant of the patent: **15.05.2024**
(21) Application number: 22160626.2
(22) Date of filing: 07.03.2022
(51) Int. Cl.: F24C 15/20

(54) **VENT HOOD SYSTEM WITH AUTOMATIC SENSING MEANS**
ABLUFTHAUBENSYSTEM MIT AUTOMATISCHER ERFASSUNG
SYSTÈME DE HOTTE AVEC MOYENS DE DÉTECTION AUTOMATIQUE

(30) Priority: 08.03.2021 US 202117194787
(43) Date of publication of application: 14.09.2022
(73) Proprietor: Whirlpool Corporation, Benton Harbor, MI 49022 (US)
(72) Inventor: Frayer, Katelin M., 21024 Cassinetta di Biandronno (VA) (IT); Kuhn, Ryan D., 21024 Cassinetta di Biandronno (VA) (IT); Schneemann, Jason M., 21024 Cassinetta di Biandronno (VA) (IT); Stuart, Annie M., 21024 Cassinetta di Biandronno (VA) (IT)
(74) Representative: PGA S.p.A., Milano, Succursale di Lugano

(56) References cited:
- EP-A2- 2 824 395
- WO-A1-2014/019862
- WO-A1-2020/163443
- CN-A- 111 664 490
- DE-B3-102005 025 787
- US-A1- 2014 230 662

## Description

### FIELD OF DISCLOSURE

Aspects of the disclosure generally relate to a vent hood for sensing air quality, and for automatically performing operations based on the air quality.

### DESCRIPTION OF RELATED ART

Vent hoods are generally designed to remove odors, moisture, grease from the cooking environment, as well as carbon monoxide, nitrogen dioxide, and other pollutants. Some hoods are ducted or vented to evacuate air from the cooking environment to the outside. Other hoods are ductless, and recirculate filtered air back into the cooking environment.
Document WO2014/019862A1 discloses a vapour extraction device having a fan with a fan motor, a fan box and a first sensor arranged in or on the fan box. A first odour status of a cooking environment of the vapour extraction device is determined by means of the first sensor. The vapour extraction device also has a second sensor arranged outside the vapour extraction device in direct proximity thereto. The second sensor is used to determine a second odour status of the cooking environment of the vapour extraction device. The two sensors are connected to a processing unit for determining the air cleaning effect of the vapour extraction device by means of the first odour status and the second odour status.
Document EP2824395A2 discloses an extractor hood having an odor filter, a first odor sensor in an air path before the odor filter and a second odor sensor in an air path after the odor filter. A filter efficiency of the odor filter is calculated from the ratio of a first sensor signal of the first odor sensor to a second sensor signal of the second odor sensor.
Document DE102005025787B3 discloses a fume removal hood comprising a fan to suck an air stream, a cleaning filter downstream of the fan and a sensing system to assess contamination of the filter. The sensing system includes a first air mass sensor arranged upstream of the filter and a second air mass sensor arranged in the exhaust duct downstream of the fan.
Document WO2020/1634431A1 discloses an exhaust hood configured to capture fumes from a cooking appliance, the exhaust hood conveying fumes to a particulate removal stage and then to an odor removal stage. An inlet volatile organic compound sensor is arranged upstream of the odor removal stage and an outlet volatile organic compound sensor is arranged downstream of the odor removal stage. The odor removal stage includes a carbon filter and the volatile organic compound sensors allow to generate data indicative of a remaining life of the carbon filter.
Document CN111664490A discloses a control method for a range hood, wherein predicted use data are obtained through prediction based on historical operation data of the range hood in a time period, such as power-on times, low speed usage time and high speed usage time.

### SUMMARY

According to the invention, a vent hood system is configured to receive air from a cooking environment, the vent hood including a filter. A post-filter air quality sensor is configured to provide an air quality signal indicative of sensed air quality parameters of air after exiting the filter. A vent hood controller is configured to indicate an alert that the filter requires servicing, based on a comparison of the sensed air quality parameters to baseline air quality parameters indicating a lack of filter efficiency.

According to the invention, a pre-filter air quality sensor is configured to provide the baseline air quality parameters as a pre-filter signal indicative of the baseline air quality parameters of the air before entering the filter.

According to the invention, the vent hood controller is further configured to infer the baseline air quality parameters as a historical average of the sensed air quality parameters measured by the post-filter air quality sensor.

### BRIEF DESCRIPTION OF THE DRAWINGS

FIG. 1 illustrates an example cooking environment having a cooking appliance and a vent hood;
FIG. 2 illustrates an example environment including further details of the vent hood;
FIG. 3 illustrates an example system for the application of a venting control strategy to the operation of the vent hood;
FIG. 4 illustrates an example process for the automatic control of the blower of the vent hood;
FIG. 5 illustrates an example process for the automatic alerting that the filter of the vent hood requires service; and
FIG. 6 illustrates an example set of graphs of the air quality parameters in view of the application of the venting control strategy to the operation of the vent hood.

### DETAILED DESCRIPTION

As required, detailed embodiments of the present disclosure are disclosed herein; however, it is to be understood that the disclosed embodiments are merely exemplary of the disclosure that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present disclosure.

Aspects of the disclosure relate to the automatic activation of a vent hood to maintain indoor air quality. A system may include a sensor in a vent hood to detect indoor air quality coming in through the vent hood. The system may automatically turn on the vent hood based on air quality parameters. In addition, the system may include a sensor at an outlet of a vent hood filter and may trigger IOT notifications to replace the filter when needed. Further, the system may obtain data from off-board sensors, such as PM2.5, VOC, CO₂, or CO, for measuring indoor air quality when deciding when to turn on the vent hood.

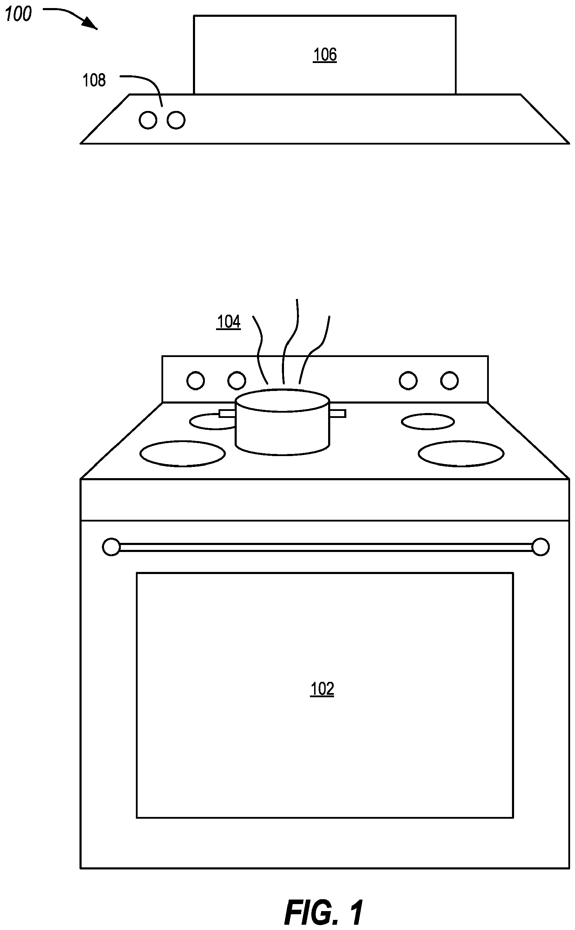

FIG. 1 illustrates an example cooking environment 100 having a cooking appliance 102 and a vent hood 106. The cooking environment 100 may include a kitchen or other room in which cooking activities may be performed. In general, cooking involves the use of heat to prepare food for consumption. Some example cooking techniques include grilling, baking, frying, frying, or microwaving. The cooking appliance 102, such as a stove, oven, microwave, etc., may be used to perform the cooking techniques. In addition to the preparation of food, a side effect of cooking may involve the introduction of particulate 104 into the air of the cooking environment.

Vent hoods 106 are generally designed to remove odors, moisture and grease from the cooking environment 100, as well as carbon monoxide, nitrogen dioxide, and other pollutants. Some vent hoods 106 are ducted or vented to evacuate air from the cooking environment 100 to the outside. Other vent hoods 106 are ductless, and filter and recirculate cleaned air back into the cooking environment 100. As shown, many hoods are placed in the cooking environment 100 above the cooking appliance 102. However, some vent hoods 106 are downdraft hoods that are placed below the cooking appliance 102.

The vent hood 106 may generally include user interface controls 108 to allow a user to activate or deactivate the vent hood 106. For instance, the user may turn on the vent hood 106 while cooking and may turn the vent hood 106 off once the cooking operation is complete. As another possibility, the user may elect to turn on the vent hood 106 to vent out the cooking environment 100 for a reason unrelated to cooking, such as the existence of an undesirable smell in the cooking environment 100.

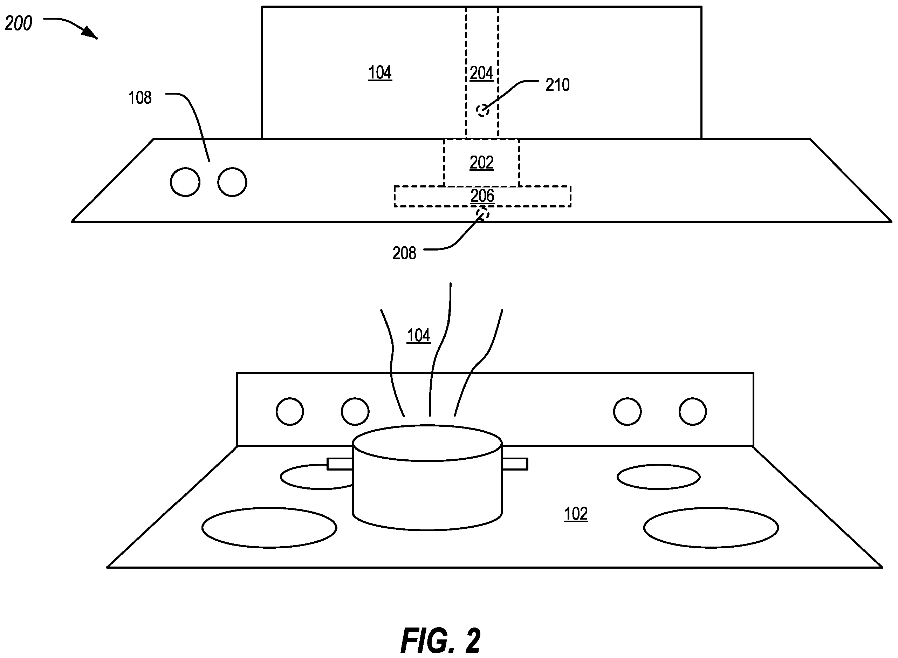

FIG. 2 illustrates an example environment 200 including further details of the vent hood 106. As shown, the vent hood 106 may include an exhaust fan or blower 202, which is coupled to an exhaust duct 204, which may discharge impure air to the outside atmosphere, such as via a roof jack or wall cap through a wall of the building. In some examples, the vent hood 106 further includes a filter 206 at the intake of the blower 202, which may be used to filter the impure air before passing the air into the exhaust duct 204. If the vent hood 106 includes a filter 206, the exhaust duct 204 of the vent hood 106 may instead vent back into the cooking environment 100, as the air has been cleaned of the particulate 104 by its passage through the material of the filter 206.

However, users may forget to turn on the vent hood 106 while cooking. This may allow for the uncontrolled release of pollutants, such as VOCs and particulates, into the cooking environment 100. Accordingly, a pre-filter air quality sensor 208 may be placed in the vent hood 106 to provide a signal indicative of the air quality parameters of the air in the proximity of the vent hood 106. Indoor air quality (IAQ) parameters sensed by the pre-filter air quality sensor 208 may include one or more atmospheric particulate matter smaller than 2.5 microns (PM2.5), VOCs such as aldehydes and polycyclic aromatic hydrocarbons (PAH), CO₂, and CO. This signal may be used as an input to a decision regarding whether to turn on the blower 202 and pass the air through the filter 206.

Additionally, a post-filter air quality sensor 210 may be placed within the exhaust duct 204 or at an exit from the exhaust duct 204. This post-filter air quality sensor 210 may provide a second signal indicative of the air quality parameters of the air after passage through the filter 206. If the air quality indicated by the post-filter air quality sensor 210 is not improved as compared to the air quality indicated by the pre-filter air quality sensor 208, then the filter 206 may no longer be removing particulate 104 from the air. If so, it may be advisable to clean or replace the filter 206. This approach may remove guesswork out of deciding when to replace the filter 206 based on performance of the filter 206.

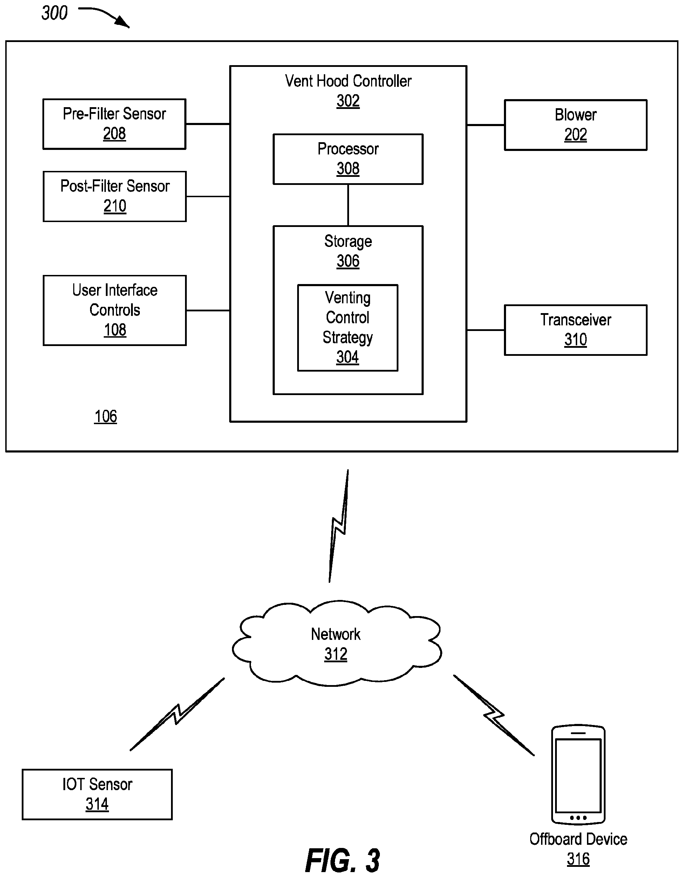

FIG. 3 illustrates an example system 300 for the application of a venting control strategy 304 to the operation of the vent hood 106. A vent hood controller 302 may include a storage 306 configured to maintain the venting control strategy 304, as well as one or more processors 308 to perform instructions, commands, and other routines in support of the operations of the vent hood controller 302 described herein.

The vent hood controller 302 may be configured to execute instructions to automatically turn on and off the blower 202. The vent hood controller 302 may also be configured to execute instructions to indicate alerts with respect to replacement of the filter 206. Such instructions and other data may be maintained in a non-volatile manner using a variety of types of computer-readable storage 306. The computer-readable medium (also referred to as a processor-readable medium or storage) includes any non-transitory medium (*e*.*g*., a tangible medium) that participates in providing instructions or other data that may be read by the one or more processors 308 of the vent hood controller 302. Computer-executable instructions may be compiled or interpreted from computer programs created using a variety of programming languages and/or technologies, including, without limitation, and either alone or in combination, JAVA, C, C++, C#, OBJECTIVE C, FORTRAN, PASCAL, JAVASCRIPT, PYTHON, PERL, etc.

The vent hood controller 302 may be configured to receive input from the user interface controls 108 to provide for manual control of the blower 202. For instance, the user interface controls 108 may include controls to turn the blower 202 on or off. In another example, the user interface controls 108 may provide for multiple levels of blower operation, such as off, low, medium, and high airflow. In some instances, the user interface controls 108 may further include an indication of the current level of operation of the blower 202. For instance, the currently selected level of blower operation in the user interface controls 108 may be backlit.

The vent hood controller 302 may be further configured to receive input from the pre-filter air quality sensor 208 and the post-filter air quality sensor 210. Based on the venting control strategy 304, the vent hood controller 302 may utilize signals from the pre-filter air quality sensor 208 to determine whether to automatically control the blower 202 on or off. For instance, if the level of particulate as indicated by the signal from the pre-filter air quality sensor 208 exceeds a predefined threshold, then the vent hood controller 302 may automatically activate the blower 202 as specified by the venting control strategy 304, despite a lack of user input to the user interface controls 108. The vent hood controller 302 may also utilize the signals from the pre-filter air quality sensor 208 to automatically deactivate the blower 202 as specified by the venting control strategy 304, despite a lack of user input to the user interface controls 108. For instance, if the blower 202 is on, but particulate levels as indicated by the pre-filter air quality sensor 208 are below the predefined threshold (or second predefined threshold lower than the first predefined threshold may be specified by the venting control strategy 304 to provide hysteresis), then the vent hood controller 302 may automatically deactivate the blower 202.

In another example, the vent hood controller 302 may utilize multiple thresholds and corresponding speeds. For instance, if the level of particulate as indicated by the signal from the pre-filter air quality sensor 208 exceeds a first predefined threshold specified by the venting control strategy 304, then the vent hood controller 302 may automatically activate the blower 202 at a first speed specified by the venting control strategy 304, while if the level of particulate as indicated by the signal from the pre-filter air quality sensor 208 exceeds a second, higher predefined threshold specified by the venting control strategy 304, then the vent hood controller 302 may automatically activate the blower 202 at a second, higher speed specified by the venting control strategy 304. Similarly, slowdown or deactivation of the blower 202 may be performed by the vent hood controller 302.

Variations on the automatic operation are possible. For instance, similar to the use of the signal from the pre-filter air quality sensor 208, the vent hood controller 302 may additionally or alternately utilize the signal from the post-filter air quality sensor 210 to determine whether to turn the blower 202 on, off, up, or down. Regardless of whether one or both of the pre-filter air quality sensor 208 or post-filter air quality sensor 210 are used, this approach to automatic activation of the vent hood 106 may prevent particulate from increasing to undesirable levels within the cooking environment 100. As another example, this approach may avoid a smoke alarm from accidentally being triggered due to cooking, by turning on the blower 202 prior to smoke filling the cooking environment 100.

Moreover, the vent hood controller 302 may be further configured to utilize a difference in the signals between the pre-filter air quality sensor 208 and the post-filter air quality sensor 210 to identify the effectiveness of the filter 206. For instance, if the air quality as indicated by the post-filter air quality sensor 210 is less than a predefined percentage cleaner than the air quality as indicated by the pre-filter air quality sensor 208, then the vent hood controller 302 may indicate that the filter 206 requires cleaning or replacement. In an example, the user interface controls 108 may include an indicator that can be illuminated or otherwise activated by the vent hood controller 302 to indicate that the filter 206 is not operating effectively.

The vent hood controller 302 may be further configured to communicate with other components external to the vent hood 106. For instance, the vent hood controller 302 may include a wireless transceiver 310 (*e*.*g*., a BLUETOOTH module, a ZIGBEE transceiver, a Wi-Fi transceiver, an IrDA transceiver, a radio frequency identification (RFID) transceiver, a cellular transceiver, etc.) configured to communicate over a network 312 (or directly to other devices depending on protocol) with compatible wireless devices. The compatible wireless devices may include, for example IOT sensors 314 and/or offboard devices 316.

The IOT sensors 314 may include various devices configured to provide additional information to the vent hood controller 302. In an example, the IOT sensors 314 may include air quality sensors, which may be similar in operation to the pre-filter air quality sensor 208 and the post-filter air quality sensor 210 but may provide signal information wirelessly to the vent hood controller 302. This additional information may be used by the vent hood controller 302 to perform operations according to the air quality within the cooking environment 100. For instance, one or more IOT sensors 314 may be placed around the cooking environment 100, to allow the vent hood controller 302 to automatically activate the blower 202 based on pollutants detected at locations remote from the vent hood 106.

The offboard devices 316 may be any of various types of portable computing devices, such as cellular phones, tablet computers, smart watches, laptop computers, portable music players, or other devices capable of communication with the vent hood controller 302. In an example, the offboard device 316 may be used to wirelessly control the operation of the vent hood 106. For instance, the offboard device 316 may execute program instructions using a processor of the offboard device 316 to receive input from a user and to wirelessly send commands to the transceiver 310 to cause the vent hood controller 302 to turn the blower on, off, up, or down. In one example, the offboard device 316 may display a user interface of blower controls, which may be selected by the user to invoke the various blower functions.

In another example, the offboard device 316 may be configured to receive alerts from the vent hood controller 302. For instance, as discussed above, the vent hood controller 302 may determine that the filter 206 requires cleaning or replacement. If so, the vent hood controller 302 may utilize the transceiver 310 to send a wireless signal to cause the offboard device 316 to display an alert indicating that the filter 206 should be serviced.

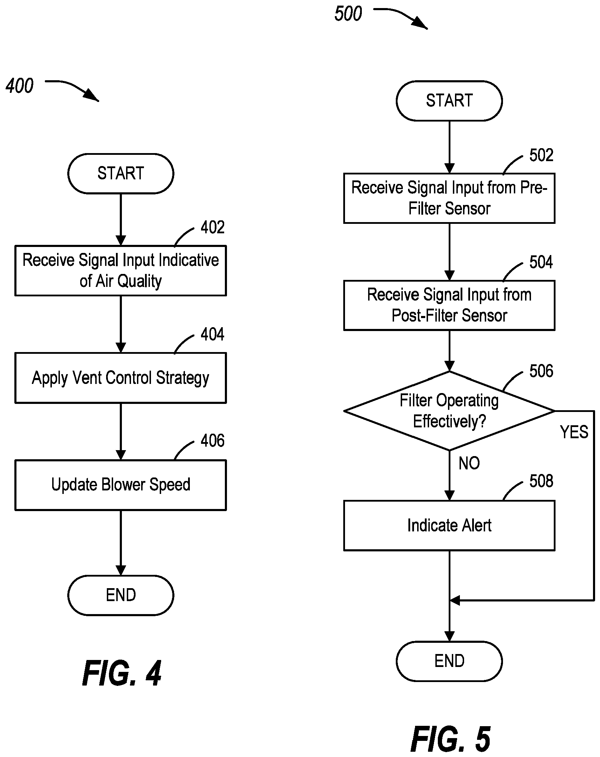

FIG. 4 illustrates an example process 400 for the automatic control of the blower 202 of the vent hood 106. In an example, the process 400 may be performed by the vent hood controller 302 in the context of the system 300.

At operation 402, the vent hood controller 302 receives signal input indicative of air quality. In an example, the vent hood controller 302 may receive the signal input from one or more sensors of the vent hood 106, such as the pre-filter air quality sensor 208 and/or the post-filter air quality sensor 210. In another example, the vent hood controller 302 may receive the signal input from one or more sensors external to the vent hood 106, such as one or more IOT sensors 314. The sensor input may provide information to the vent hood controller 302 with respect to air quality parameters, such as one or more of: atmospheric particulate matter smaller than 2.5 microns (PM2.5), VOC such as aldehydes and PAHs, CO₂, and CO.

At operation 404, the vent hood controller 302 applies the venting control strategy 304 to the operation of the blower 202. For instance, if the level of particulate as indicated by the signal input exceeds a predefined threshold and the blower 202 is off, then the vent hood controller 302 may determine to activate the blower 202. If the blower 202 is on, but particulate levels as indicated by the signal input are below the predefined threshold (or second predefined threshold lower than the first predefined threshold to provide hysteresis), then the vent hood controller 302 may determine to automatically deactivate the blower 202. In another example, if the level of particulate as indicated by the signal input exceeds a first predefined threshold, then the vent hood controller 302 may determine to activate the blower 202 at a first speed, while if the level of particulate as indicated by the signal input exceeds a second, higher predefined threshold, then the vent hood controller 302 may determine to activate the blower 202 at a second, higher speed. Similarly, slowdown or deactivation of the blower 202 may be performed.

At operation 406, the vent hood controller 302 updates the blower 202 speed in accordance with the venting control strategy 304. After operation 406, the process 400 ends. It should be noted that while the process 400 is shown as being linear, the process 400 may be executed continually, and one or more operations of the process 400 may be performed consecutively or concurrently.

FIG. 5 illustrates an example process 500 for the automatic alerting that the filter 206 of the vent hood 106 requires service. As with the process 400, the process 500 may be performed by the vent hood controller 302 in the context of the system 300.

At operation 502, the vent hood controller 302 receives signal input from the pre-filter air quality sensor 208. The pre-filter air quality sensor 208 may be located at an inlet to the filter 206 and may accordingly provide signal input indicative of the air quality before the air has entered the filter 206. In another example, the sensor may be an IOT sensor 314 located within the cooking environment 100 remote from the vent hood 106. Regardless of location, the sensor input may provide information to the vent hood controller 302 with respect to air quality parameters, such as one or more of: atmospheric particulate matter smaller than 2.5 microns (PM2.5), VOCs such as aldehydes and PAH, CO₂, and CO.

At operation 504, the vent hood controller 302 receives signal input from the post-filter air quality sensor 210. The post-filter air quality sensor 210 may be located at an outlet from the filter 206 and may accordingly provide signal input indicative of the air quality after the air has passed through the filter 206. As with operation 502, sensor input may provide information to the vent hood controller 302 with respect to the same or similar air quality parameters.

At operation 506, the vent hood controller 302 determines whether the filter 206 is operating effectively. If the air quality indicated by the post-filter air quality sensor 210 is not improved as compared to the air quality indicated by the pre-filter air quality sensor 208, then the filter 206 may no longer be removing particulate 104 from the air. If so, it may be advisable to clean or replace the filter 206. In an example, the vent hood controller 302 may compare the air quality before the filter 206 as indicated by the pre-filter air quality sensor 208 with the air quality after the filter 206 as indicated by the post-filter air quality sensor 210. If the difference in air quality is at least a minimum difference in absolute, relative, and/or percentage of one or more of the air quality parameters, then the process 500 may end. If, however, the difference is not at least a minimum difference control passes to operation 508. The specific air quality metrics to measure, and the specific minimum differences to utilize may be specified by the venting control strategy 304.

At operation 508, the vent hood controller 302 indicates an alert. In an example, the vent hood controller 302 may activate an indicator on the user interface controls 108 to indicate that the filter 206 is not operating effectively. In another example, the vent hood controller 302 may utilize the transceiver 310 to send a wireless alert to the offboard device 316. This alert may be displayed by the offboard device 316, alerting the user of the offboard device 316 of the condition of the filter 206

After operation 508, the process 500 ends. It should be noted that while the process 500 is shown as being linear, the process 500 may be executed continually, and one or more operations of the process 500 may be performed consecutively or concurrently.

Variations on the process 500 are possible. For instance, filter performance may be inferred based on a baseline level instead of using the signal from the pre-filter air quality sensor 208. In an example, the vent hood controller 302 may establish a baseline level of air quality parameters over time. This baseline may be set by measurement of air quality parameters responsive to replacement of the filter 206, as an average level of air quality parameters over time, etc. If the signal from the post-filter air quality sensor 210 indicates that measured levels of air quality parameters worsen as compared to the baseline, then the vent hood controller 302 may infer that the filter 206 is no longer operating effectively and may raise the alert at operation 506.

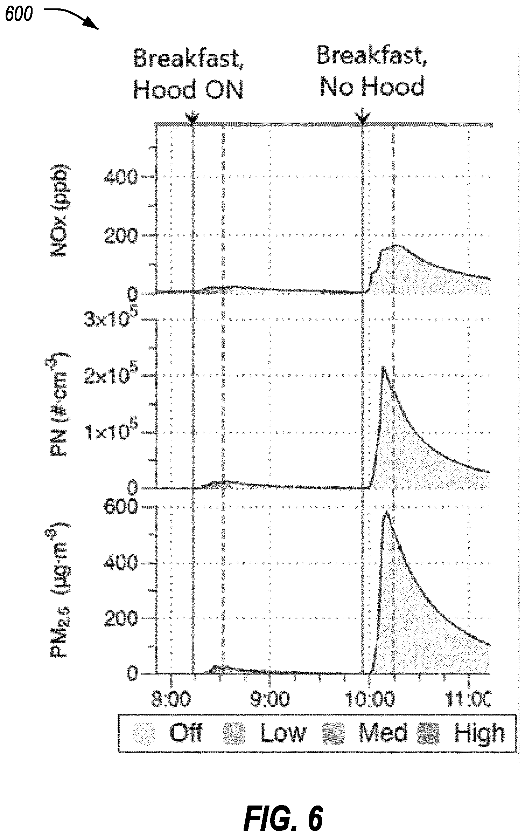

FIG. 6 illustrates an example set of graphs 600 of the air quality parameters in view of the application of the venting control strategy 304 to the operation of the vent hood 106. As shown, the Y-axis of the graph illustrates various measures of particulates in the cooking environment 100. While NOx (ppb), PN (#cm⁻³), and PM2.5 (µm⁻³) are illustrated, other measures of particulates may be used. These particulates may be sensed, for example, by the pre-filter air quality sensor 208 and/or the IOT sensors 314. The X-axis of the set of graphs 600 is time of day. As can be seen to the left of the set of graphs 600, the venting control strategy 304 invokes the blower 202 responsive to the detection of particulates. This is compared to the scenario shown on the right of the set of graphs 600, where the blower 202 is not activated. Thus, by the automatic application of the venting control strategy 304 (such as shown in the processes 400 and 500), the vent hood 106 automatically reduces the amount of particulates in the cooking environment 100, improving the IAQ within the cooking environment 100 and throughout the home.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as read-only memory (ROM) devices and information alterably stored on writable storage media such as floppy disks, magnetic tapes, compact discs (CDs), random access memory (RAM) devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims.

## Claims

1. A system (300) comprising:
a vent hood (106) configured to receive air from a cooking environment (100), the vent hood (106) including a filter (206);
a post-filter air quality sensor (210) configured to provide an air quality signal indicative of sensed air quality parameters of air after exiting the filter (206);
a vent hood controller (302) configured to indicate an alert that the filter (206) requires servicing, based on a comparison of the sensed air quality parameters to baseline air quality parameters indicating a lack of filter (206) efficiency; and
a pre-filter air quality sensor (208) configured to provide the baseline air quality parameters as a pre-filter signal indicative of the baseline air quality parameters of the air before entering the filter (206),
**characterised in that** the vent hood controller (302) is further configured to infer the baseline air quality parameters as a historical average of the sensed air quality parameters measured by the post-filter air quality sensor (210).

2. The system (300) of claim 1, wherein the pre-filter air quality sensor (208) is located at an inlet to the filter (206), and the post-filter air quality sensor (210) is located at an outlet from the filter (206).

3. The system (300) of claim 1, wherein the pre-filter air quality sensor (208) is an internet of things (IOT) sensor located within the cooking environment (100) remote from the vent hood (106).

4. The system (300) of claim 1, wherein the vent hood controller (302) is further configured to activate a blower (202) of the vent hood (106) responsive to the pre-filter air quality sensor (208) indicating that the baseline air quality parameters exceed a predefined threshold, and is optionally further configured to deactivate the blower (202) of the vent hood (106) responsive to the pre-filter air quality sensor (208) indicating that the baseline air quality parameters no longer exceed the predefined threshold.

5. The system (300) of any one of claims 1-4, wherein the vent hood controller (302) is connected to a network (312) and further configured to provide the alert to an offboard device via the network (312).

6. The system (300) of any one of claims 1-5, wherein the vent hood controller (302) is further configured to display the alert using user interface controls (108) of the vent hood (106).

7. The system (300) of any one of claims 1-6, wherein the baseline air quality parameters and the sensed air quality parameters include one or more of atmospheric particulate (104) matter smaller than 2.5 microns (PM2.5), volatile organic compounds (VOC), carbon dioxide (CO2), or carbon monoxide (CO).

8. The system (300) of any one of claims 1-7, wherein the comparison of the sensed air quality parameters to the baseline air quality parameters includes to:
determine a difference between the baseline air quality parameters and the sensed air quality parameters as an absolute, relative, and/or percentage; and
indicate the alert responsive to the difference exceeding at least a predefined threshold difference.

9. The system (300) of any one of claims 1-8, wherein the vent hood controller (302) is further configured to activate a blower (202) of the vent hood (106) responsive to the sensed air quality parameters exceeding a predefined threshold, and optionally further configured to deactivate the blower (202) of the vent hood (106) responsive to the sensed air quality parameters of the air before entering the filter (206) no longer exceeding the predefined threshold.

10. The system (300) of any one of claims 1-9, wherein the vent hood controller (302) is further configured to:
activate a blower (202) of the vent hood (106) at a first speed setting responsive to the baseline air quality parameters exceeding a first predefined threshold;
activate the blower (202) at a second speed setting responsive to the baseline air quality parameters exceeding a second predefined threshold, the second speed setting being faster than the first speed setting, the second predefined threshold being higher than the first predefined threshold; and
deactivate the blower (202) of the vent hood (106) responsive to the baseline air quality parameters of the air no longer exceeding the first predefined threshold.

## Patentansprüche

1. System (300), umfassend:
eine Ablufthaube (106), die so ausgestaltet ist, dass sie Luft aus einer Kochumgebung (100) erhält, wobei die Ablufthaube (106) einen Filter (206) umfasst;
einen Nachfilter-Luftqualitätssensor (210), der so ausgestaltet ist, dass er ein Luftqualitätssignal bereitstellt, das erfasste Luftqualitätsparameter von Luft nach Verlassen des Filters (206) anzeigt;
eine Ablufthaubensteuerung (302), die so ausgestaltet ist, dass sie eine Benachrichtigung, dass der Filter (206) eine Wartung erfordert, basierend darauf anzeigt, dass ein Vergleich von den erfassten Luftqualitätsparametern mit Luftqualitätsbasisparametern eine mangelnde Effizienz des Filters (206) anzeigt; und
einen Vorfilter-Luftqualitätssensor (208), der so ausgestaltet ist, dass er die Luftqualitätsbasisparameter als ein Vorfiltersignal bereitstellt, das die Luftqualitätsbasisparameter der Luft vor Eintreten in den Filter (206) anzeigt,
**dadurch gekennzeichnet, dass** die Ablufthaubensteuerung (302) ferner so ausgestaltet ist, dass sie die Luftqualitätsbasisparameter als einen historischen Durchschnitt der von dem Nachfilter-Luftqualitätssensor (210) gemessenen erfassten Luftqualitätsparameter ableitet.

2. System (300) nach Anspruch 1, wobei sich der Vorfilter-Luftqualitätssensor (208) an einem Einlass in den Filter (206) befindet, und sich der Nachfilter-Luftqualitätssensor (210) an einem Auslass aus dem Filter (206) befindet.

3. System (300) nach Anspruch 1, wobei der Vorfilter-Luftqualitätssensor (208) ein IoT(Internet of Things)-Sensor ist, der sich innerhalb der Kochumgebung (100) entfernt von der Ablufthaube (106) befindet.

4. System (300) nach Anspruch 1, wobei die Ablufthaubensteuerung (302) ferner so ausgestaltet ist, dass sie in Reaktion darauf, dass der Vorfilter-Luftqualitätssensor (208) anzeigt, dass die Luftqualitätsbasisparameter einen vorgegebenen Schwellenwert übersteigen, ein Gebläse (202) der Ablufthaube (106) aktiviert, und optional ferner so ausgestaltet ist, dass sie in Reaktion darauf, dass der Vorfilter-Luftqualitätssensor (208) anzeigt, dass die Luftqualitätsbasisparameter den vorgegebenen Schwellenwert nicht länger übersteigen, das Gebläse (202) der Ablufthaube (106) deaktiviert.

5. System (300) nach einem beliebigen der Ansprüche 1-4, wobei die Ablufthaubensteuerung (302) mit einem Netzwerk (312) verbunden ist und ferner so ausgestaltet ist, dass sie die Benachrichtigung über das Netzwerk (312) für eine Offboard-Vorrichtung bereitstellt.

6. System (300) nach einem beliebigen der Ansprüche 1-5, wobei die Ablufthaubensteuerung (302) ferner so ausgestaltet ist, dass sie die Benachrichtigung unter Verwendung von Benutzerschnittstellen-Steuerelementen (108) der Ablufthaube (106) anzeigt.

7. System (300) nach einem beliebigen der Ansprüche 1-6, wobei die Luftqualitätsbasisparameter und die erfassten Luftqualitätsparameter eines oder mehrere von Teilchen von Feinstaub (104), die kleiner als 2,5 Mikrometer (PM2,5) sind, flüchtigen organischen Verbindungen (VOC), Kohlendioxid (CO2) oder Kohlenmonoxid (CO) umfassen.

8. System (300) nach einem beliebigen der Ansprüche 1-7, wobei der Vergleich von den erfassten Luftqualitätsparametern mit den Luftqualitätsbasisparametern Folgendes umfasst:
Bestimmen einer Differenz zwischen den Luftqualitätsbasisparametern und den erfassten Luftqualitätsparametern als einen Absolutwert, einen Relativwert und/oder einen Prozentsatz; und
Anzeigen der Benachrichtigung in Reaktion darauf, dass die Differenz zumindest eine vorgegebene Schwellendifferenz übersteigt.

9. System (300) nach einem beliebigen der Ansprüche 1-8, wobei die Ablufthaubensteuerung (302) ferner so ausgestaltet ist, dass sie ein Gebläse (202) der Ablufthaube (106) in Reaktion darauf, dass die erfassten Luftqualitätsparameter einen vorgegebenen Schwellenwert übersteigen, aktiviert, und optional ferner so ausgestaltet ist, dass sie das Gebläse (202) der Ablufthaube (106) in Reaktion darauf, dass die erfassten Luftqualitätsparameter der Luft vor Eintreten in den Filter (206) den vorgegebenen Schwellenwert nicht länger übersteigen, deaktiviert.

10. System (300) nach einem beliebigen der Ansprüche 1-9, wobei die Ablufthaubensteuerung (302) ferner so ausgestaltet ist, dass sie:
ein Gebläse (202) der Ablufthaube (106) mit einer ersten Geschwindigkeitseinstellung in Reaktion darauf aktiviert, dass die Luftqualitätsbasisparameter einen ersten vorgegebenen Schwellenwert übersteigen;
das Gebläse (202) mit einer zweiten Geschwindigkeitseinstellung in Reaktion darauf aktiviert, dass die Luftqualitätsbasisparameter einen zweiten vorgegebenen Schwellenwert übersteigen, wobei die zweite Geschwindigkeitseinstellung schneller als die erste Geschwindigkeitseinstellung ist, wobei der zweite vorgegebene Schwellenwert höher als der erste vorgegebene Schwellenwert ist; und
das Gebläse (202) der Ablufthaube (106) in Reaktion darauf, dass die Luftqualitätsbasisparameter der Luft den ersten vorgegebenen Schwellenwert nicht länger übersteigen, deaktiviert.

## Revendications

1. Système (300) comprenant :
une hotte de ventilation (106) configurée pour recevoir de l'air d'un environnement de cuisson (100), la hotte de ventilation (106) comprenant un filtre (206) ;
un capteur post-filtre de la qualité de l'air (210) configuré pour fournir un signal de qualité d'air indicatif de paramètres détectés de la qualité de l'air, de l'air après la sortie du filtre (206) ;
un dispositif de commande de la hotte de ventilation (302) configuré pour indiquer une alerte que le filtre (206) requiert un entretien, sur la base d'une comparaison des paramètres détectés de la qualité de l'air à des paramètres de ligne de référence de la qualité de l'air indiquant un manque d'efficacité du filtre (206) ; et
un capteur préfiltre de la qualité de l'air (208) configuré pour fournir les paramètres de ligne de référence de la qualité de l'air comme signal préfiltre indicatif des paramètres de ligne de référence de la qualité de l'air, de l'air avant l'entrée dans le filtre (206),
**caractérisé en ce que** le dispositif de commande de la hotte de ventilation (302) est en outre configuré pour déduire les paramètres de ligne de référence de la qualité de l'air comme moyenne des paramètres détectés de la qualité de l'air dans le passé, mesurée par le capteur post-filtre de la qualité de l'air (210).

2. Système (300) selon la revendication 1, le capteur préfiltre de la qualité de l'air (208) étant localisé au niveau d'un orifice d'entrée dans le filtre (206), et le capteur post-filtre de la qualité de l'air (210) étant localisé au niveau d'un orifice de sortie depuis le filtre (206).

3. Système (300) selon la revendication 1, le capteur préfiltre de la qualité de l'air (208) étant un capteur de l'Internet des Objets (IdO) localisé à l'intérieur de l'environnement de cuisson (100) à distance de la hotte de ventilation (106).

4. Système (300) selon la revendication 1, le dispositif de commande de la hotte de ventilation (302) étant en outre configuré pour activer une soufflerie (202) de la hotte de ventilation (106) sensible au capteur préfiltre de la qualité de l'air (208) indiquant que les paramètres de ligne de référence de la qualité de l'air excèdent un seuil prédéfini, et étant en outre éventuellement configuré pour désactiver la soufflerie (202) de la hotte de ventilation (106) sensible au capteur préfiltre de la qualité de l'air (208) indiquant que les paramètres de ligne de référence de la qualité de l'air n'excèdent plus le seuil prédéfini.

5. Système (300) selon l'une quelconque des revendications 1 à 4, le dispositif de commande de la hotte de ventilation (302) étant raccordé à un réseau (312) et en outre configuré pour fournir l'alerte à un dispositif externe par l'intermédiaire du réseau (312).

6. Système (300) selon l'une quelconque des revendications 1 à 5, le dispositif de commande de la hotte de ventilation (302) étant en outre configuré pour afficher l'alerte en utilisant des commandes de l'interface utilisateur (108) de la hotte de ventilation (106).

7. Système (300) selon l'une quelconque des revendications 1 à 6, les paramètres de ligne de référence de la qualité de l'air et les paramètres détectés de la qualité de l'air comprenant une ou plusieurs parmi une matière sous forme de particules atmosphériques (104) inférieures à 2,5 microns (PM2.5), des composés organiques volatils (COV), du dioxyde de carbone (CO₂), ou du monoxyde de carbone (CO).

8. Système (300) selon l'une quelconque des revendications 1 à 7, la comparaison des paramètres détectés de la qualité de l'air aux paramètres de ligne de référence de la qualité de l'air comprenant les étapes consistant à :
déterminer une différence entre les paramètres de ligne de référence de la qualité de l'air et les paramètres détectés de la qualité de l'air comme absolue, relative, et/ou en pourcentage ; et
indiquer l'alerte sensible à la différence excédant au moins une différence de seuil prédéfini.

9. Système (300) selon l'une quelconque des revendications 1 à 8, le dispositif de commande de la hotte de ventilation (302) étant en outre configuré pour activer une soufflerie (202) de la hotte de ventilation (106) sensible aux paramètres détectés de la qualité de l'air excédant un seuil prédéfini, et éventuellement en outre configuré pour désactiver la soufflerie (202) de la hotte de ventilation (106) sensible aux paramètres détectés de la qualité de l'air, de l'air avant son entrée dans le filtre (206), n'excédant plus le seuil prédéfini.

10. Système (300) selon l'une quelconque des revendications 1 à 9, le dispositif de commande de la hotte de ventilation (302) étant en outre configuré pour :
activer une soufflerie (202) de la hotte de ventilation (106) à un premier paramétrage de vitesse sensible aux paramètres de ligne de référence de la qualité de l'air excédant un premier seuil prédéfini ;
activer la soufflerie (202) à un second paramétrage de vitesse sensible aux paramètres de ligne de référence de la qualité de l'air excédant un second seuil prédéfini, le second paramétrage de vitesse étant plus rapide que le premier paramétrage de vitesse, le second seuil prédéfini étant supérieur au premier seuil prédéfini ; et
désactiver la soufflerie (202) de la hotte de ventilation (106) sensible aux paramètres de ligne de référence de la qualité de l'air, de l'air n'excédant plus le premier seuil prédéfini.
